# EUROPÄISCHE PATENTSCHRIFT

(11) **EP 3 075 456 B1**
(45) Veröffentlichungstag und Bekanntmachung des Hinweises auf die Patenterteilung: **24.05.2023**
(21) Anmeldenummer: 16000726.6
(22) Anmeldetag: 29.03.2016
(51) Int. Cl.: B05B 5/04, B05B 3/10

(54) **WELLENELEMENT EINES LUFTLAGERS, LUFTLAGER UND ROTATIONSZERSTÄUBER**
WAVE ELEMENT OF AN AIR-CUSHION BEARING, AIR CUSHION BEARING AND ROTARY ATOMIZER
ÉLÉMENT D'ARBRE D'UN PALIER D'AIR, PALIER D'AIR ET PULVÉRISATEUR ROTATIF

(30) Priorität: 28.03.2015 DE 102015004066
(43) Veröffentlichungstag der Anmeldung: 05.10.2016
(73) Patentinhaber: b+m surface systems GmbH, 36132 Eiterfeld (DE)
(72) Erfinder: Pavlekovic, Markus, 72135 Dettenhausen (DE); Reichler, Jan, 78465 Konstanz (DE); Tomaschko, Jannis, 71088 Holzgerlingen (DE); Vogelsang, Harald, 71116 Gärtringen (DE)
(74) Vertreter: Ostertag & Partner Patentanwälte mbB

(56) Entgegenhaltungen:
- EP-A1- 1 118 388
- GB-A- 984 075
- JP-A- 2003 278 751
- JP-A- 2009 243 461
- US-B2- 6 581 857

## Beschreibung

Die Erfindung betrifft einen elektrostatisch arbeitenden Rotationszerstäuber zum Aufbringen eines Beschichtungsmaterials auf einen Gegenstand mit
a) einem um eine Rotationsachse drehbaren Glockenteller;
b) einer Antriebseinheit für den Glockenteller;
c) einem Luftlager, welches als erstes Lagerteil eine Lagerbuchse und als zweites Lagerteil ein Wellenelement umfasst;
   wobei
d) das Wellenelement mit der Antriebseinheit und dem Glockenteller gekoppelt ist.

Derartige Rotationszerstäuber sind aus der US 6 581 857 B2 bekannt und werden zum Beispiel in der Automobilindustrie verwendet, um insbesondere Fahrzeugkarosserien oder deren Anbauteile zu lackieren oder mit einem Schutzmaterial zu beschichten.

Der Glockenteller dient dabei zum Zerstäuben des Beschichtungsmaterials, wozu er im Betrieb mit sehr hohen Umdrehungsgeschwindigkeiten von 10.000 bis 100.000 U min⁻¹ mittels eines pneumatischen oder elektrischen Antriebs um seine Rotationsachse gedreht wird. Eine Antriebswelle als Lagerteil des Luftlagers ist dabei mit dem Antrieb und dem Glockenteller gekoppelt. Ein solches Luftlager ist beispielsweise aus der US 8 973 848 B2 bekannt.

Dem rotierenden Glockenteller wird Beschichtungsmaterial zugeführt und auf Grund von Zentrifugalkräften, die auf das Beschichtungsmaterial wirken, auf dem Glockenteller als Film nach außen getrieben, bis es zu einer radial außen liegenden Abrisskante des Glockentellers gelangt. Dort wirken derart hohe Zentrifugalkräfte auf das Beschichtungsmaterial, dass es in Form von feinen Tröpfchen tangential weggeschleudert wird

Bei bekannten Rotationszerstäubern, die arbeiten elektrostatisch arbeiten, wird das zu applizierende Beschichtungsmaterial aufgeladen, wogegen der zu beschichtende Gegenstand geerdet ist. Dabei bildet sich ein elektrisches Feld zwischen dem Rotationszerstäuber und dem Gegenstand aus, durch welches das aufgeladene Beschichtungsmaterial gerichtet auf den Gegenstand appliziert wird. Zu diesem Zweck steht der Rotationszerstäuber unter Hochspannung. Zwischen den beiden Lagerteilen des Luftlagers, d.h. zwischen der Lagerbuchse und dem Wellenelement, verbleibt im Betrieb nur ein schmaler Zwischenraum. Dort kommt es regelmäßig zu Spannungsüberschlägen, durch welche sich an der Oberfläche des Wellenelements Oberflächendefekte ausbilden, die Zusammensetzung verändern und Aufrauhungen entstehen können. Aus der US 6 581 857 B2 ist es bekannt, die Lebensdauer einer Turbine zu verlängern, indem solche Spannungsüberschläge durch zusätzliche Maßnahmen verhindert werden, die auf Grund des sogenannten Sputtering zu diesen Veränderungen an der Oberfläche führen.

Im Laufe der Zeit verschlechtern sich dadurch die Laufeigenschaften des Luftlagers und die Gebrauchsfähigkeit des Rotationszerstäubers, bis eine Wartung und/oder ein Austausch der Bauteile oder des vollständigen Rotationszerstäubers erforderlich werden. Es ist daher Aufgabe der Erfindung, einen Rotationszerstäuber der eingangs genannten Art zu schaffen, durch welchen die Betriebszeit der Komponenten verbessert werden kann.

Diese Aufgabe wird bei einem Rotationszerstäuber der eingangs genannten Art dadurch gelöst, dass
e) das Luftlager als erstes Lagerteil eine Lagerbuchse und als zweites Lagerteil ein Wellenelement umfasst, das wenigstens einen in der Lagerbuchse geführten Lagerabschnitt aufweist,
wobei
das Wellenelement einen Wellenteil aus einem ersten Material aufweist und zumindest im Lagerabschnitt eine Lageroberfläche aus einem zweiten Material definiert;
das zweite Material ein Metalloxid, ein Nitrid, ein Carbid, ein Borid, ein Verbundmaterial, amorpher Kohlenstoff DLC oder eine Mischform dieser Materialien ist;
die Lagerbuchse zumindest an ihrer Innenmantelfläche aus Graphit oder aus Bronze oder aus Sinterbronze oder aus Sinterstahl ausgebildet ist.

Die Erfindung beruht auf der Erkenntnis, dass dadurch ein Luftlager mit höheren Standzeiten bereitgestellt werden kann.

Besonders gute Ergebnisse werden erzielt, wenn das zweite Material eines der nachfolgenden Materialien ist: Titandioxid TiO₂, Titancarbonitrid TiCN, Titannitrid TiN, Aluminiumtitannitrid AlTiN, Titanaluminiumnitrid TiAIN, Chromnitrid CrN, Hafniumcarbid HfC, Titancarbid TiC, Zirkoniumcarbid ZrC, Niobcarbid NbC, Wolframcarbid, Zrikoniumnitrid ZrN, Titandiborid TiB₂, Titannitrid(TiN)-verstärktes Siliciumnitrid Si₃N₄.

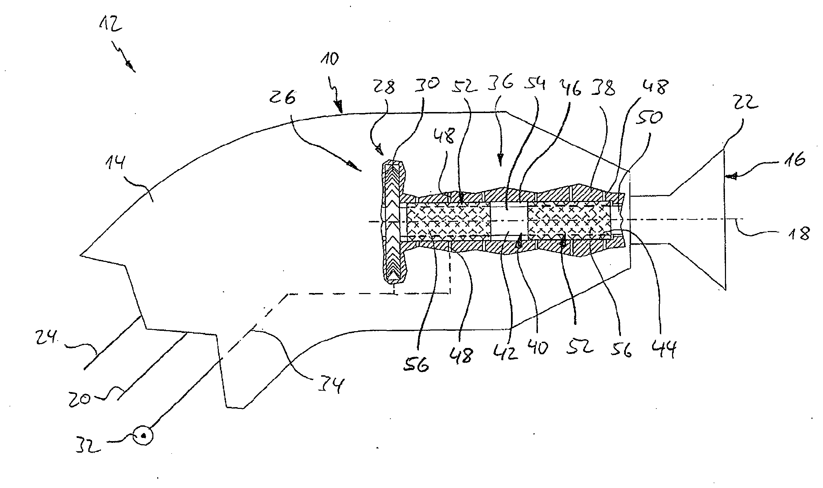

Ein Ausführungsbeispiel der Erfindung wird nun anhand der einzigen Figur näher erläutert, welche einen Kopfabschnitt 10 eines insgesamt mit 12 bezeichneten Rotationszerstäubers mit einem Gehäuse 14 zeigt. Mittels des Rotationszerstäubers 12 kann Beschichtungsmaterial, insbesondere Lack, auf einen nicht eigens gezeigten Gegenstand appliziert werden. Der Rotationszerstäuber 12 arbeitet in an und für sich bekannter Art und Weise elektrostatisch.

Der Rotationszerstäuber 12 umfasst in an und für sich bekannter Weise einen Glockenteller 16, der mit hoher Geschwindigkeit um eine Rotationsachse 18 drehbar ist. Über eine Materialleitung 20 wird dem Glockenteller 16 ein Beschichtungsmaterial zugeführt, welches an einer in der Figur nicht zu erkennenden inneren Abströmfläche des Glockentellers 16 abströmt und von einer Abrisskante 22 des Glockentellers 16 weggeschleudert wird. Über einen elektrischen Anschluss 24 kann der Rotationszerstäuber 12 mit Hochspannung beaufschlagt werden.

Der Glockenteller 16 wird mittels einer Antriebseinheit 26 gedreht, welche eine pneumatisch betriebene Antriebsturbine 28 mit einem Turbinenrad 30 umfasst, das aus einer Druckluftquelle 32 über ein Druckluftleitungssystem 34 mit Druckluft beaufschlagt wird. Im Betrieb rotiert das Glockenteil 24 mit Drehzahlen von 10.000 bis 100.000 min⁻¹ um seine Rotationsachse 18. Die Antriebseinheit 26 kann alternativ zur pneumatischen Betriebsweise auch einen Elektromotor umfassen.

Der Rotationszerstäuber 12 umfasst ein Luftlager 36 mit einem ersten Lagerteil in Form einer Lagerbuchse 38 und einem zweiten Lagerteil in Form eines Wellenelements 40. Bei dem Rotationszerstäuber 12 ist das Wellenelement 40 eine Antriebswelle 42, welche an einem ersten Ende mit dem Glockenteller 16 und an einem zweiten Ende mit der Antriebsturbine 28 gekoppelt ist. Die Antriebswelle 42 sorgt so zugleich für die Lagerung des Turbinenrads 30 der Antriebsturbine 28.

Die Lagerbuchse 38 definiert mit einer Innenmantelfläche 44 eine Lagerkammer 46, in welcher das Wellenelement 40 geführt ist. Zumindest an dieser Innenmantelfläche 44 ist die Lagerbuchse 38 aus Graphit oder aus Bronze oder aus Sinterbronze oder aus ausgebildet. Grundsätzlich kann die gesamte Lagerbuchse 38 aus einem solchen Material gefertigt sein.

Die Lagerbuchse 38 weist eine Vielzahl von radialen Durchgangsöffnungen 48 auf, durch welche Druckluft in die Lagerkammer 46 zwischen das Wellenelement 40 und die Innenmantelfläche 44 der Lagerbuchse 38 eingeblasen werden kann und von denen nur einige ein Bezugszeichen tragen. Die Durchgangsöffnungen 48 sind über das Druckluftleitungssystem 34 mit der Druckluftquelle 32 verbunden, was in der Figur nur für eine Durchgangsöffnung 48 veranschaulicht ist.

Das Wellenelement 40 umfasst beim vorliegenden Ausführungsbeispiel einen Wellenteil 50 aus einem ersten Material, wie beispielsweise Stahl, und zwei Lagerabschnitte 52 mit denen das Wellenelement 40 in der Lagerbuchse 38 geführt ist und welche deren Durchgangsöffnungen 48 überdecken, so dass die aus den Durchgangsöffnungen 48 einströmende Druckluft die Lagerabschnitte 52 beaufschlagt. Zwischen den Lagerabschnitten 52 weist das Wellenelement 40 einen taillierten Abschnitt 54 auf. Bei einer nicht eigens gezeigten Abwandlung kann das Wellenelement 40 auch einen durchgehend ausgebildeten Lagerabschnitt 52 aufweisen, der sich längs der Lagerbuchse 38 erstreckt.

Das Wellenelement 40 weist in den Lagerabschnitten 52 einen Lagermantel 56 aus einem zweiten Material auf und definiert so in dem jeweiligen Lagerabschnitt 52 eine Lageroberfläche 58 aus diesem zweiten Material, die der Innenmantelfläche 44 der Lagerbuchse 38 zugewandt ist. Bei einer nicht eigens gezeigten Abwandlung kann auch ein Lagerabschnitt 52 als Voll- oder Hohlkörper aus diesem zweiten Material gefertigt sein. Bei einer ebenfalls nicht eigens gezeigten Abwandlung können das erste Material und das zweite Material auch dasselbe Material sein.

Der jeweilige Lagermantel 56 kann aus einem der eingangs genannten Materialien ausgebildet sein. In der Praxis hat es sich als besonders gut erwiesen, wenn die Lagerbuchse 38 bzw. deren Innenmantelfläche 44 aus Graphit und der Lagermantel 56 eines Lagerabschnitts 52 des Wellenelements 40 aus Titancarbonitrid TiCN gebildet sind.

## Patentansprüche

1. Elektrostatisch arbeitender Rotationszerstäuber zum Aufbringen eines Beschichtungsmaterials auf einen Gegenstand mit
a) einem um eine Rotationsachse (18) drehbaren Glockenteller (16);
b) einer Antriebseinheit (26) für den Glockenteller (16);
c) einem Luftlager (36), welches als erstes Lagerteil eine Lagerbuchse (38) und als zweites Lagerteil ein Wellenelement (40) umfasst;
wobei
d) das Wellenelement (40) mit der Antriebseinheit (26) und dem Glockenteller (16) gekoppelt ist,
**dadurch gekennzeichnet, dass**
e) das Luftlager (36) als erstes Lagerteil eine Lagerbuchse (38) und als zweites Lagerteil ein Wellenelement (40) umfasst, das wenigstens einen in der Lagerbuchse (38) geführten Lagerabschnitt (52) aufweist,
wobei
das Wellenelement (40) einen Wellenteil (50) aus einem ersten Material aufweist und zumindest im Lagerabschnitt (52) eine Lageroberfläche (58) aus einem zweiten Material definiert;
das zweite Material ein Metalloxid, ein Nitrid, ein Carbid, ein Borid, ein Verbundmaterial, amorpher Kohlenstoff DLC oder eine Mischform dieser Materialien ist;
die Lagerbuchse (38) zumindest an ihrer Innenmantelfläche (44) aus Graphit oder aus Bronze oder aus Sinterbronze oder aus Sinterstahl ausgebildet ist.

2. Elektrostatisch arbeitender Rotationszerstäuber nach Anspruch 1, **dadurch gekennzeichnet, dass** das zweite Material eines der nachfolgenden Materialien ist: Titandioxid TiO2, Titancarbonitrid TiCN, Titannitrid TiN, Aluminiumtitannitrid AlTiN, Titanaluminiumnitrid TiAIN, Chromnitrid CrN, Hafniumcarbid HfC, Titancarbid TiC, Zirkoniumcarbid ZrC, Niobcarbid NbC, Wolframcarbid, Zrikoniumnitrid ZrN, Titandiborid TiB2, Titannitrid(TiN)-verstärktes Siliciumnitrid Si3N4.

## Claims

1. Electrostatic rotary atomizer for applying a coating material to an article, comprising
a) a bell cup (16) rotatable about an axis of rotation (18);
b) a drive unit (26) for the bell cup (16);
c) an air bearing (36) comprising a bearing bush (38) as the first part of the bearing and a shaft element (40) as the second part of the bearing;
where
d) the shaft element (40) is coupled to the drive unit (26) and the bell cup (16),
**characterized in that**
e) the air bearing (36) comprises a bearing bush (38) as the first part of the bearing and a shaft element (40) having at least one bearing section (52) guided within the bearing bush (38) as the second part of the bearing,
where
the shaft element (40) has a shaft portion (50) composed of a first material and, at least in the bearing section (52), defines a bearing surface (58) composed of a second material;
the second material is a metal oxide, a nitride, a carbide, a boride, a composite material, amorphous carbon DLC, or a mixed form of these materials;
the bearing bush (38), at least on its inner lateral face (44), is formed from graphite or from bronze or from sintered bronze or from sintered steel.

2. Electrostatic rotary atomizer according to Claim 1, **characterized in that** the second material is one of the following materials: titanium dioxide TiO2, titanium carbonitride TiCN, titanium nitride TiN, aluminium titanium nitride AlTiN, titanium aluminium nitride TiAlN, chromium nitride CrN, hafnium carbide HfC, titanium carbide TiC, zirconium carbide ZrC, niobium carbide NbC, tungsten carbide, zirconium nitride ZrN, titanium diboride TiB2, titanium nitride (TiN)-reinforced silicon nitride Si3N4.

## Revendications

1. Atomiseur rotatif à fonctionnement électrostatique destiné à appliquer un matériau de revêtement sur un objet, ledit atomiseur rotatif comprenant
a) un disque à cloche (16) pouvant tourner sur un axe de rotation (18) ;
b) une unité d'entraînement (26) destinée au disque à cloche (16) ;
c) un palier à air (36) qui comprend un coussinet (38) comme première partie de palier et un élément d'arbre (40) comme deuxième partie de palier ;
d) l'élément d'arbre (40) étant accouplé à l'unité d'entraînement (26) et au disque à cloche (16),
**caractérisé en ce que**
e) le palier à air (36) comprend comme première partie de palier un coussinet (38) et comme deuxième partie de palier un élément d'arbre (40) qui comporte au moins une portion de palier (52) guidée dans le coussinet (38),
l'élément d'arbre (40) comportant une partie d'arbre (50) en un premier matériau et définissant au moins dans la portion de palier (52) une surface de palier (58) en un deuxième matériau ;
le deuxième matériau étant un oxyde métallique, un nitrure, un carbure, un borure, un matériau composite, du carbone amorphe DLC, ou un mélange de ces matériaux ;
le coussinet (38) étant en graphite ou en bronze ou en bronze fritté ou en acier fritté, au moins sur sa surface d'enveloppe intérieure (44).

2. Atomiseur rotatif à fonctionnement électrostatique selon la revendication 1, **caractérisé en ce que** le deuxième matériau est l'un des matériaux suivants : dioxyde de titane TiO₂, carbonitrure de titane TiCN, nitrure de titane TiN, nitrure de titane et aluminium AlTiN, nitrure d'aluminium et titane TiAlN, nitrure de chrome CrN, carbure d'hafnium HfC, carbure de titane TiC, carbure de zirconium ZrC, carbure de niobium NbC, carbure de tungstène, nitrure de zirconium ZrN, diborure de titane TiB2, nitrure de silicium renforcé de nitrure de titane (TiN) Si3N4.
